Europäisches Patentamt

European Patent Office

Office européen des brevets

(19)

(11) Numéro de publication : **0 679 423 A1**

(12) ## DEMANDE DE BREVET EUROPEEN

(21) Numéro de dépôt : **95400948.6**

(22) Date de dépôt : **26.04.95**

(51) Int. Cl.$^6$ : **B01D 37/02,** B01D 39/04

(30) Priorité : **29.04.94 FR 9405263**

(43) Date de publication de la demande :
**02.11.95 Bulletin 95/44**

(84) Etats contractants désignés :
**AT BE CH DE DK ES FR GB GR IE IT LI LU MC NL PT SE**

(71) Demandeur : **ELF ANTAR FRANCE
Tour Elf
2, Place de la Coupole
La Défense 6
F-92400 Courbevoie (FR)**

(72) Inventeur : **Navarre, François-Pierre
Les Cèdres,
Chemin du Barthélémy
F-69260 Charbonnières les Bains (FR)**
Inventeur : **Bossand, Bernard
89 Hameau des Chanturières
F-69360 Communay (FR)**
Inventeur : **Fraux, Alain
9 Les Arcades
F-38540 Herieux (FR)**

(74) Mandataire : **Boillot, Marc
Elf Aquitaine Production
Département Propriété Industrielle
Tour Elf
Cédex 45
F-92078 Paris La Défense (FR)**

(54) **Procédé de traitement des suspensions huileuses.**

(57)     L'invention concerne un procédé de traitement de suspensions comprenant de l'huile, de l'eau et des matières solides.

Selon l'invention, la suspension est soumise à une centrifugation au moyen d'une essoreuse centrifuge à précouche, ladite précouche étant constituée de poudre organique, présente un indice de compressibilité compris entre 0 et 1,2.

Sous l'effet de la centrifugation, la suspension est soumise à une accélération comprise entre 10 et 2500 fois la pesanteur soit entre 100 et 25000 m/s$^2$. Les matières solides sont retenues par la précouche et le centrifugat est recueilli.

L'invention trouve son application dans les industries de traitement du pétrole brut, de traitement des huiles de lubrification et agro-alimentaires qui produisent des suspensions ou émulsions riches en graisses.

EP 0 679 423 A1

## Domaine technique

La présente invention concerne un procédé de traitement d'une suspension huileuse comprenant de l'eau, de l'huile et des matières solides selon lequel la suspension est centrifugée au moyen d'une essoreuse centrifuge à précouche, les matières solides étant retenues par ladite précouche et le centrifugat recueilli.

Elle trouve son application dans les industries de traitement du pétrole brut. Par exemple, pour traiter les rejets ou slops des raffineries, les boues huileuses des puits de pétrole, les fonds des réservoirs de transport ou de stockage des produits pétroliers. Elle trouve aussi son application pour le traitement des huiles d'origine pétrolière utilisées pour la lubrification des moteurs et des compresseurs, ainsi que pour le traitement des fluides de coupe. Elle trouve également son application dans les industries agro-alimentaires qui produisent des suspensions ou émulsions riches en graisses végétales ou animales telles que le suif.

## Etat de la technique antérieure

Les suspensions huileuses ne peuvent pas être rejetées en l'état dans la nature en raison de leur caractère polluant. On a donc proposé de les incinérer selon des procédés connus qui consomment des quantités non négligeables de combustibles, ou de les traiter par voie chimique ou mécanique.

Les traitements chimiques par des agents tensioactifs nuisent à la valorisation ultérieure de l'huile car une partie des agents tensio-actifs reste dans l'huile. Pour le traitement des hydrocarbures, leur présence rend dangereux un recyclage de l'hydrocarbure dans les dessaleurs des unités de distillation de pétrole brut et interdit également leur traitement par des procédés catalytiques compte tenu des risques de pollution des catalyseurs utilisés. Les traitements chimiques par agents tensio-actifs nuisent également à la qualité de l'eau récupérée dont la charge organique augmente et rendent difficile son traitement.

Une autre catégorie de traitement est celle des traitements mécaniques qui consomment peu ou pas d'énergie thermique, ni d'agents tensio-actifs. Ces traitements sont décrits dans le brevet US 4,260,489 visant un procédé de traitement d'une boue huileuse qui consiste à filtrer la boue dans un filtre à précouche, à traiter le résidu de filtration avec un solvant hydrocarboné et à purifier le résidu extrait à la vapeur d'eau. Selon ce procédé, le filtre utilisé est un filtre à plaque ou à bougie fonctionnant sous pression.

Ce procédé présente l'inconvénient d'être discontinu et de nécessiter des opérations manuelles de démontage, nettoyage et remontage. Il est donc mal adapté au traitement des suspensions huileuses produites par les usines qui travaillent en continu. De plus ces opérations sont coûteuses.

La centrifugation classique n'est souvent pas adaptée à l'hétérogénéité de la charge.

L'automatisation n'est pas faisable et le fonctionnement doit être assuré par du personnel qualifié ce qui génère un coût élevé. Des suspensions ne sont pas destabilisables par cette méthode. On peut produire des centrifugats trop riches en huile et sédiment pour pouvoir être recyclés au traitement biologique en particulier. On peut produire des huiles trop chargées en eau et sédiments pour être valorisées directement ou être recyclées aux colonnes de distillation. Ces machines centrifuges ne peuvent fonctionner qu'à des vitesses de rotation >25000 m/s$^2$ ce qui génère des consommations d'électricité coûteuses.

Un autre procédé de traitement des suspensions huileuses est décrit dans le brevet d'invention FR 87 03372 dans lequel la suspension est filtrée sur un filtre à précouche. La précouche comprend de la farine de bois dont au moins 80 % en poids des constituants ont une taille entre 50 et 300 micromètres et moins de 10 % en poids ont une taille inférieure à 50 micromètres.

La filtration est faite sur un filtre rotatif à dépression tournant à une vitesse comprise entre 5 et 100 tr/heure. Le gâteau formé sur la précouche est raclé au moyen d'une lame et évacué. Ce procédé présente les inconvénients suivants :

- il faut une plage étroite ou une courbe resserrée de granulométrie des constituants de la précouche pour obtenir une épaisseur uniforme, ce qui entraîne un coût élevé de la farine de bois utilisée,
- une coupure même de courte durée de l'alimentation électrique produit un effondrement de la précouche,
- l'opération réalisée à température élevée autour de 70°C est délicate du fait des tensions de vapeur de l'eau et des produits organiques,
- la consommation d'eau est importante pour produire le vide au moyen de pompes à anneaux liquides,
- l'automatisation de ce procédé est coûteuse et délicate, du fait que la dépression à l'intérieur du filtre doit être réglée en fonction de la qualité de la boue,
- l'épaisseur de la précouche est limitée pratiquement à 200 mm, du fait que la différence de pression entre les 2 faces de la précouche est au plus égale à la pression atmosphérique,
- la précouche dont la surface peut atteindre 30 m$^2$ n'est pas toujours homogène, ce qui nuit à la qualité de la filtration,
- la différence de pression entre les 2 faces de la précouche est variable en fonction de la position des tuyères qui réalisent le vide, ce qui nuit aussi à la qualité de la filtration,
- l'utilisation de pompes à vide et de tuyères fait que le procédé est bruyant, c'est une contrainte de localisation.

- les grandes surfaces de filtration conduisent à des dispositifs encombrants, qui les rendent difficilement utilisables pour certaines applications comme le traitement des boues à bord des plate-formes offshore de production de pétrole par exemple.

**Exposé de l'invention**

La présente invention a justement pour objet de rémédier à ces inconvénients et de fournir un procédé très efficace et économique de traitement de suspensions huileuses.

La plage de granulométrie de la poudre utilisée pour réaliser la précouche peut être large, elle est donc meilleur marché.

La température de la suspension peut être réglée à une valeur comprise entre 40 et 120°C en fonction des caractéristiques de ses constituants.

Le procédé se prête bien à un fonctionnement continu automatisé.

Les dispositifs pour la mise en oeuvre de ce procédé sont peu bruyants, <80 décibels à 1 mètre, et beaucoup moins encombrants que les autres dispositifs pour des capacités de traitement comparables.

Ce procédé est utilisable pour le traitement des suspensions huileuses dans les industries de traitement du pétrole depuis la production jusqu'à la distribution en passant par le raffinage y compris les opérations de stockage et de transport.

Ce procédé trouve aussi son application dans les industries agro-alimentaires qui produisent des suspensions riches en graisses et protéines ou graises végétales et animales et les effluents organiques.

A cette fin, la présente invention propose un procédé de traitement d'une suspension comprenant une fraction organique constituée d'huile d'origine pétrolière ou de produits émulsionnables issus de végétaux ou d'animaux, des matières solides et de l'eau, selon lequel la suspension est centrifugée au moyen d'une essoreuse centrifuge, à précouche, munie d'un panier rotatif de forme cylindrique, cylindro conique ou conique, les matières solides étant retenues par ladite précouche pour former un gâteau et le centrifugat étant recueilli, et selon lequel on utilise une précouche formée d'une matière poudreuse ayant un indice de compressibilité compris entre 0 et 1,2. L'indice de compressibilité est défini à partir de la formule $\chi = k\,(\Delta P)^n$

$\Delta P$ étant la pression exercée sur le gateau de filtration ;

k       = coefficient de proportionnalité

n       = indice de compressibilité.

$\chi$       = capacité à la filtration en m³/m²/kg de solide

Selon ce procédé, on dispose ladite précouche sur une toile ou un tamis recouvrant une face intérieure d'une paroi perforée du panier rotatif, et on fait tourner le panier rotatif à une vitesse telle que la suspension est soumise au niveau de la précouche à une accélération comprise entre 100 et 25000 m/s². On introduit la suspension à l'intérieur du panier où elle est soumise à une centrifugation.

Selon une autre caractéristique du procédé, on utilise une précouche constituée préalablement au traitement d'une suspension, en introduisant à l'intérieur du panier un mélange de fluxant ou d'eau et de poudre organique à une température comprise entre 15 et 40°C et on soumet ce mélange à une centrifugation jusqu'à obtenir une précouche d'épaisseur comprise entre 1 et 60 cm et de préférence de 10 à 30 cm.

Selon une autre caractéristique, l'indice de compressibilité de la précouche est comprise entre 0 et 0,7, la suspension traitée comprend 85 à 98% d'eau, 1 à 10 % d'huile ou de produits émulsionnables, 1 à 10 % de matière solides, sous l'effet de la centrifugation, le centrifugat recueilli à l'extérieur du panier est constitué par au moins 99,5 % d'eau, l'huile ou les produits émulsionnables étant retenus par la précouche.

Selon une autre caractéristique, l'indice de compressibilité de la précouche est compris entre 0 et 0,5, la vitesse du panier est réglée pour obtenir une accélération de la suspension au niveau de la précouche comprise entre 500 et 25000 m/s², la suspension comprenant 30 à 50% d'eau, 40 à 60% d'huile ou de produits émulsionnables, 5 à 15% de matières solides, sous l'effet de la centrifugation, l'eau et l'huile ou les produits émulsionnables traversent la précouche et sont recueillis à l'extérieur du panier rotatif.

Selon une autre caractéristique, l'indice de compressibilité de la précouche est compris entre 0 et 1, la vitesse du panier est réglée pour obtenir une accélération de la suspension au niveau de la précouche comprise entre 100 et 20 000 m/s² la suspension comprenant moins de 5% d'eau, 80 à 95% d'huile ou de produits émulsionnables, 0,1 à 4% de matières solides, on ajoute à ladite suspension un produit fluxant dans des proportions comprises entre 10 et 50% en poids par rapport à la phase huile, et une poudre hydrophile à raison de 0,8 à 1,2% poids de la suspension, le mélange ainsi obtenu est injecté à l'intérieur du panier, sous l'effet de la centrifugation, ledit mélange se sépare pour produire un centrifugat qui traverse la précouche, l'eau étant absorbée par la poudre hydrophile.

Selon une autre caractéristique, de la chaux vive est ajoutée à la suspension à raison de 0,2 à 2% poids.

Selon une autre caractéristique, la suspension est une huile d'origine pétrolière ayant rempli une fonction de lubrification, le produit fluxant est du gasole de craqueur catalytique et le centrifugat obtenu est un carburant pour moteurs diesels.

Selon une autre caractéristique, la précouche est rendue oléophobe par imprégnation d'eau préalablement au traitement de la suspension, qui comprend 50 à 70% d'eau, 10 à 40% d'huile ou de produits émulsionnables de densité comprise entre 0,8 et 0,9, de 0,1 à 10% de matières solides. Sous l'effet de la centrifugation, l'eau traverse la précouche avec moins de 10% de l'huile ou des produits émulsionnables et au moins 90% de l'huile ou des produits émulsionnables restent à l'intérieur du panier où ils sont récupérés.

La viscosité de la suspension est réglée à une valeur comprise entre 4 et 20 mPa.s par réglage de sa température entre 40 et 120°C et/ou par mélange avec un produit fluxant. Du coke de charbon en poudre est ajouté à la suspension à raison de 0,2 à 0,8% poids.

Le gâteau est éliminé au moyen d'un dispositif mécanique comprenant une lame disposée à l'intérieur du panier rotatif selon une génératrice, jusqu'à réduction de l'épaisseur de la précouche à une valeur inférieure à 1 cm. Enfin, le gâteau est utilisé comme combustible.

Le centrifugat, obtenu par traitement d'une huile d'origine pétrolière ayant rempli une fonction de lubrification à laquelle on a ajouté comme fluxant du gasole de craqueur catalytique, est utilisé comme carburant d'alimentation des moteurs diesels.

## Description des dessins

- La figure 1 représente schématiquement un dispositif pour la mise en oeuvre du procédé objet de l'invention.
- La figure 2 représente une vue en coupe d'un panier d'essoreuse à précouche.

## Description détaillée de l'invention.

D'une manière générale, le procédé de l'invention est utilisé pour traiter des suspensions constituées d'huile, d'eau et de matières solides.

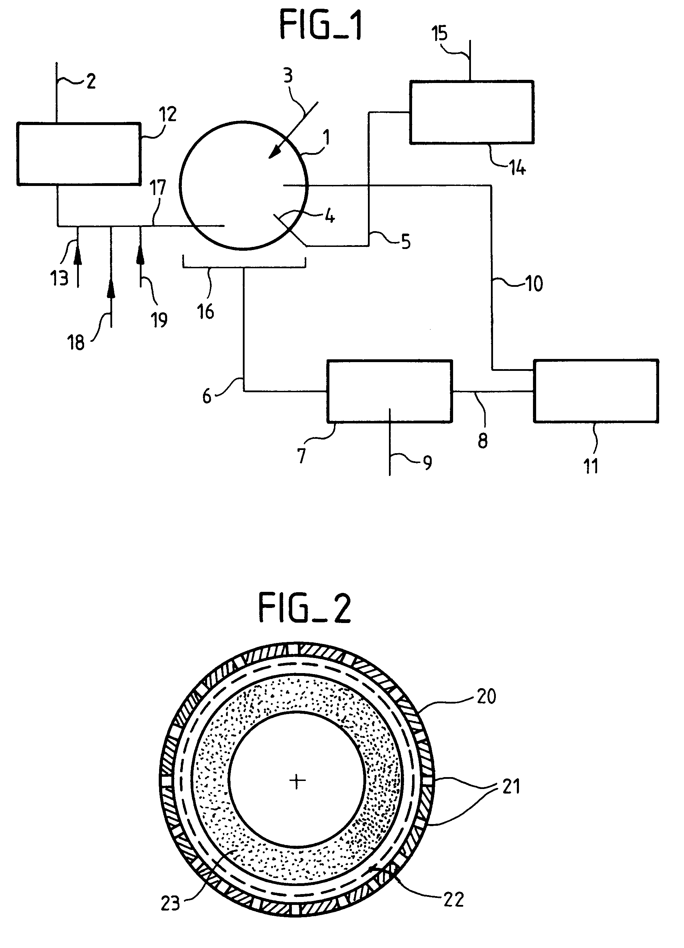

Selon le mode de réalisation représenté figures 1 et 2, le dispositif pour la mise en oeuvre du procédé objet de l'invention comporte :
- un panier rotatif 1 de forme cylindrique ou conique,
- une conduite 2 d'arrivée de la suspension à traiter,
- un ballon 12 tampon,
- une conduite 17 qui relie le ballon 12 au panier 1
- le bac de stockage de l'huile,
- une conduite 3 d'amenée de poudre,
- des moyens de réchauffage,
- des moyens 4 de raclage du gâteau,
- une conduite 13 d'amenée du fluxant,
- une conduite 18 d'amenée d'un agent minéral en poudre,
- une conduite 19 d'amenée de poudre de coke de charbon,
- une machine 14 de transformation du gâteau,
- des moyens d'évacuation 5 qui relient le couteau racleur 4 à la machine 14,
- une conduite 15 d'amenée d'additif de combustible,
- un bac 16 de récupération du filtrat,
- un bac 7 de stockage du filtrat,
- une conduite 6 de liaison du bac 16 au bac 7,
- une conduite 8 qui relie le bac 7 au bac 11,
- une conduite 9 d'évacuation de l'eau du bac 7,
- une conduite 10 qui relie le panier au bac 11.

Selon le procédé de l'invention, la suspension à traiter comprenant une huile d'origine pétrolière ou des produits émulsionnables issus de végétaux ou d'animaux, des matières solides et de l'eau, arrive par la ligne (2) dans un ballon tampon (12). La suspension est ensuite acheminée par la ligne (17) depuis le ballon tampon (12) jusqu'à l'intérieur du panier rotatif (1) de forme cylindrique ou conique ou cylindro conique où elle est soumise à une centrifugation.

La suspension est soumise à une accélération de 100 à 25000 m/s².

La relation entre g la vitesse de rotation et le diamètre du panier est donnée par la formule :

$$g = 5,6 \times 10^{-6} \, N^2 \, D$$

N = Tour / minute
D = diamètre en mètre

Sous l'effet de cette centrifugation, la suspension est séparée d'une part en un centrifugat qui est recueilli dans la cuve (16) et d'autre part en matières solides qui sont retenues par la précouche (23) de poudre organique.

Le centrifugat est ensuite envoyé par la conduite (6) dans le bac (7) où il décante. Quand le centrifugat contient de l'eau, celle-ci est éliminée par la conduite (9), l'huile est recueillie et envoyée par la conduite (8) dans le bac (11).

Selon une autre caractéristique de l'invention, on utilise une précouche de poudre organique, dont les constituants ont une taille supérieure à 20 micromètre. Cette poudre peut être constituée de différentes matières, par exemple, du bois, du coke de charbon ou de lignite ou de pétrole, de la poudre de maïs, du charbon actif en poudre ou en grain, du charbon de l'asphalte poreux ou une poudre composite faite de mélange.

La précouche est constituée préalablement au traitement de la suspension en introduisant par la ligne (3) un mélange de poudre de matières organiques et de l'eau ou un produit fluxant de la suspension par exemple un gazole, un carburéacteur ou de préférence un LCO.

La poudre organique est arrêtée par le tamis (22) pour constituer la précouche. On arrête l'introduction du mélange de poudre et d'eau ou de fluxant quand l'épaisseur de la précouche (23) atteint la valeur souhaitée, par exemple 30 cm.

Selon une autre caractéristique de l'invention, la viscosité de la suspension est réglée à une valeur comprise entre 4 et 20 mPa.s en réglant sa température à une valeur comprise entre 40 et 120°C. Cette valeur maximale est un avantage intéressant de l'invention. La viscosité peut également être réglée en mélangeant à la suspension un produit fluxant au moyen de la ligne (13).

Selon une autre caractéristique de l'invention, on mélange à la suspension un agent minéral hydrophile sous forme de poudre, par exemple de la chaux, du silicagel ou catalyseur usé par exemple celui du craqueur catalytique au moyen de la ligne (18).

Selon une autre caractéristique de l'invention, on mélange à la suspension de la poudre de coke de charbon à raison de 0,2 à 0,8 % poids en l'injectant par la ligne (19).

Selon une autre caractéristique, le gâteau formé par les matières en suspensions qui sont retenues par la précouche (23) est raclé au moyen d'un racloir (4) disposée à l'intérieur du panier rotatif selon une génératrice jusqu'à réduction de l'épaisseur de la précouche qui a une valeur supérieure à 1 cm.

Il n'est pas nécessaire de débattir la précouche restante pour constituer une nouvelle précouche, comme cela est le cas pour d'autres procédés connus.

Le gâteau ainsi raclé est acheminé par les moyens (5) d'évacuation jusqu'à la machine (14) de traitement.

Selon une dernière caractéristique de l'invention, le gâteau obtenu par raclage peut être utilisé comme combustible.

L'invention sera mieux comprise en considérant les exemples de réalisation données ci-après.

Sur la figure 2, on a représenté le panier (1), avec sa paroi (20) munie d'une pluralité de trous (21) et sur sa face intérieure d'un tamis (22) sur laquelle a été déposée une précouche (23) de poudre organique présentant un indice de compressibilité compris entre 0 et 1,2.

EXEMPLE 1 :

La suspension traitée est une suspension huileuse d'origine pétrolière ayant rempli une fonction de lubrification.

Elle présente les caractéristiques suivantes :
- couleur      : noire
- densité      : 0,893
- viscosité      : 78 mm²/s(ou cSt) à 40°C
- teneur en matières solides      : 3,8% ( 3 à 100 µm)
- teneur en eau      : 0,2%
- teneur en huile      : 96,00%
- point éclair      : 189°C

- indice d'acide      : 5,7
- teneur en soufre      : 0,883%
- point d'écoulement      : -42°C

On utilise pour fabriquer la précouche une farine de bois de résineux renfermant 90% de particules de 50 à 250 µm, de densité apparente 0,2 g/cm³ et de teneur en résine égale à 3% en poids.

La farine de bois est mélangée à du LCO (Light Cycle Oil), disponible à bas prix dans les raffineries équipées de craqueurs catalytiques, avant d'être injectée à l'intérieur du panier, qui tourne à 400 tr/mn, de sorte que le mélange LCO/farine est soumis par centrifugation à une accélération de 450 m/s². Les caractéristiques du LCO utilisé sont les suivantes :
- densité      : 0,97
- viscosité      : 2,5 mm²/s (ou cSt) à 50°C
- point éclair      : 97°C
- teneur en soufre      : -54°C
- teneur en azote      : 785 ppm

L'opération d'injection de mélange de LCO et de farine de bois est arrêtée quand l'épaisseur de la précouche est de 10 cm.

La suspension à traiter est mélangée à du LCO en proportion 30% en poids par rapport à la phase huile à une température de 25°C, à de la chaux vive à raison de 1% poids et à du coke de charbon en poudre à raison de 0,5 poids. Un des avantages du LCO est sa richesse en hydrocarbures aromatiques qui ont un pouvoir dissolvant important des hydrocarbures lourds qui, en leur absence, rendraient la précouche imperméable aux matières huileuses.

Le mélange ainsi obtenu est injecté à l'intérieur du panier qui tourne à 400 tr/mn.

Sous l'effet de la centrifugation, la partie légère du liquide du mélange injecté traverse la précouche et les matières en suspension se déposent sur la précouche.

Le gâteau ainsi formé est déchargé automatiquement au moyen d'un racloir qui avance progressivement jusqu'à découvrir la partie de la précouche propre.

La fraction liquide issue des suspensions et du LCO est adoucie quand elle traverse la précouche qui contient de la chaux. Les produits de la réaction d'adoucissement, les matières en suspension et la fraction lourde de la suspension constituent les éléments hydrocarbonés qui améliorent le contenu énergétique de la poudre organique. Son pouvoir calorifique est voisin de 23.10⁶ J/kg.

La fraction liquide qui a traversé la précouche se présente sous une forme d'un liquide brun foncé sans odeur, dont les caractéristiques sont les suivantes :
- densité      : 0,9
- viscosité      : 23,8 mm²/s (ou cSt) à 40°C
- point éclair      : 156°C
- teneur en soufre      : 1,4%
- point d'écoulement      : -12°C
- point de trouble      : -12°C

- température limite de filtrabilité      :-5°C
- Intervalles de distillation      :
       point central     : 205°C
       point 20 %      : 290°C
       point 50 %      : 400°C
       point 70 %      : 450°C
       point final      : 500°C
- teneur en matière solide      : indosable

Ce liquide est stable et se comporte normalement dans un moteur diesel puisqu'il a un indice de cétane compris entre 45 et 46.

La consommation électrique de l'installation est de 150 kW/heure par tonne de suspension traitée.

     Bilan matière :
     5000 t de suspension (huile usagée)
     1250 t de LCO
     80 t de poudre de bois
     50 t de chaux vive
     30 t de coke en poudre
     produisent un gâteau de 1160 t et 5250 t de carburant diesel.

Le gâteau de 1160 t est mélangé à 840 t de polymère usé dans une extrudeuse pour fournir 2000 t d'un combustible présentant un pouvoir calorifique inférieur de $33.10^6$ J/kg.

EXEMPLE 2 :

La suspension traitée est une suspension huileuse de raffinerie qui présente les caractéristiques suivantes :
- couleur      : noire
- densité      : 0,978
- viscosité      : 5 mPa.s à 50°C
- teneur en matières solides      : 6%
- teneur en eau      : 60%
- teneur en huile      : 40%

La précouche est constituée par de la farine de bois, par exemple de résineux, renfermant 90% de particules de 50 à 250 µm de densité apparente 0,13 g/cm³ et de teneur en résine indifférente. La toile filtrante disposée sur la paroi interne du panier est en polypropylène monofilament de maille 40 µm.

La farine de bois est mélangée à de l'eau avant d'être injectée à l'intérieur du panier rotatif, qui tourne à 400 tr/mn. L'opération est arrêtée quand l'épaisseur de la précouche atteint 10 cm.

La suspension est injectée à l'intérieur du panier qui tourne à 600 tr/mn. Sous l'effet de la centrifugation, l'eau traverse la précouche de farine de bois avec moins de 4 % d'huile, une huile de densité 0,888 reste à l'intérieur du panier sans traverser la précouche. Le surnageant d'huile est refoulé par pression grâce à un tube syphon vers un ballon récupérateur.

Les matières solides se déposent sur la précouche.

Le niveau de surnageant étant réduit au minimum, un racloir décharge automatiquement, en avançant progressivement, le gâteau constitué par les matières solides, de l'huile, de la poudre de bois et un peu d'eau. Les matières ainsi raclées, jusqu'à ce que la couche atteigne une épaisseur de 1 cm, sont acheminées par une vis convoyeuse, et une vis sécheuse jusqu'à une machine qui les traite.

La fraction de liquide qui traverse la précouche est décantée dans un ballon. La phase eau obtenue contient en moyenne 9 mg/kg d'hydrocarbures dissous.

Cette eau peut être traitée par une unité de traitement biologique conventionnelle.

La phase huile décantée, additionnée à l'huile recueillie à l'intérieur du panier ne contient plus d'eau décelable. Ses caractéristiques sont les suivantes :
- couleur      : brune
- densité      : 0,888
- viscosité      : 4,4 mm²/s (ou cSt) à 50°C
- teneur en soufre      : 1,81% poids

Cette huile est apte à être recyclée dans une unité de traitement de pétrole brut ou à être utilisée comme fluxant.

Les matières raclées se présentent sous la forme d'une poudre sombre renfermant en poids :
- 25% d'hydrocarbures
- 42% d'eau
- 18% de poudre organique
- 15% de cendres

Elles ont un pouvoir calorifique supérieur moyen de $65.10^6$ J/kg.

La consommation d'énergie électrique est de 150 kW.h par tonne de suspension traitée.

Le bilan matière suivant montre l'intérêt de cette technique : à partir de 4000 t de suspension, 80 t de farine, on obtient :
- 1550 t d'hydrocarbures
- 2000 t d'eau
- 530 t de gâteau combustible.

Ce gâteau peut être mélangé à 370 t d'hydrocarbures, à 700 t de polymères, 100 t d'une poudre organique pour fournir 1700 t de combustible présentant un PCI de $33.10^6$ J/kg.

Il faut noter qu'il n'est pas nécessaire de débatir la couche restante après raclage, elle peut être rechargée avec de la poudre sans difficulté.

L'exemple ci-dessus n'est pas limitatif, on peut par exemple, fonctionnaliser la précouche en utilisant une poudre traitée viricide ou bactéricide, ou bien en utilisant une poudre organique présentant une grande surface comme du charbon actif ou des caractéristiques spécifiques vis-à-vis d'agents polluants, par exemple les phénols.

Cette précouche ou une fraction (22) peut avoir un caractère permanent et se comporter comme un véritable coalesceur en matière organique de synthèse ou minérale. Une fois saturée et inactive, cette précouche peut être séparée et servir de composant par exemple au combustible solide - ou au matériau fabriqué à partir des matières raclées.

## Revendications

1- Procédé de traitement d'une suspension comprenant une fraction organique constituée d'huile d'origine pétrolière ou de produits émulsionnables issus de végétaux ou d'animaux, des matières solides et de l'eau, selon lequel la suspension est centrifugée au moyen d'une essoreuse centrifuge, à précouche, munie d'un panier rotatif de forme cylindrique ou conique, les matières solides étant retenues par ladite précouche pour former un gâteau et le centrifugat étant recueilli, caractérisé en ce que l'on utilise une précouche formée d'une matière poudreuse ayant un indice de compressibilité compris entre 0 et 1,2, en ce qu'on dispose ladite précouche sur une toile recouvrant une face intérieure d'une paroi perforée du panier rotatif, en ce qu'on fait tourner le panier rotatif à une vitesse telle que la suspension est soumise au niveau de la précouche à une accélération comprise entre 100 et 25000 m/s² et en ce que on introduit la suspension à l'intérieur du panier où elle est soumise à une centrifugation.

2- Procédé selon la revendication 1 caractérisé en ce qu'on utilise une précouche constituée préalablement au traitement d'une suspension, en introduisant à l'intérieur du panier rotatif un mélange de fluxant ou d'eau et de poudre organique à une température comprise entre 15 et 40°C et en ce qu'on soumet ce mélange à une centrifugation jusqu'à obtenir une précouche d'épaisseur comprise entre 1 et 60 cm et de préférence 10 à 30 cm.

3- Procédé selon les revendications 1 ou 2 caractérisé en ce que l'indice de compressibilité de la précouche est compris entre 0 et 0,7, la suspension traitée comprend 85 à 98% d'eau, 1 à 10% d'huile ou de produits émulsionnables, 1 à 10% de matière solides, sous l'effet de la centrifugation, le centrifugat recueilli à l'extérieur du panier est constitué par au moins 99,5% d'eau, l'huile ou les produits émulsionnables étant retenus par la précouche.

4- Procédé selon les revendications 1 et 2 caractérisé en ce que l'indice de compressibilité de la précouche est compris entre 0 et 0,5, la vitesse du panier rotatif est réglée pour obtenir une accélération de la suspension au niveau de la précouche comprise entre 500 et 25000 m/s², la suspension comprenant 30 à 50% d'eau, 40 à 60% d'huile ou de produits émulsionnables, 5 à 15% de matières solides, sous l'effet de la centrifugation, l'eau et l'huile ou les produits émulsionnables traversent la précouche et sont recueillis à l'extérieur du panier rotatif.

5- Procédé selon les revendications 1 et 2 caractérisé en ce que l'indice de compressibilité de la précouche est comprise entre 0 et 1, la vitesse du panier rotatif est réglée pour obtenir une accélération de la suspension au niveau de la précouche comprise entre 100 et 20000 m/s² la suspension comprenant moins de 5% d'eau, 80 à 95% d'huile ou de produits émulsionnables, 0,1 à 4% de matières solides, on ajoute à ladite suspension un produit fluxant dans des proportions comprises entre 10 et 50% en poids par rapport à la phase huileuse, et une poudre hydrophile à raison de 0,8 à 1,2% poids de la suspension, le mélange ainsi obtenu est injecté à l'intérieur du panier, sous l'effet de la centrifugation, ledit mélange se sépare pour produire un centrifugat qui traverse la précouche, l'eau étant absorbée par la poudre hydrophile.

6- Procédé selon la revendication 5 caractérisé en ce que de la chaux vive en poudre est ajoutée à la suspension à raison de 0,2 à 4% poids.

7- Procédé selon la revendication 6 caractérisé en ce que la suspension est une huile d'origine pétrolière ayant rempli une fonction de lubrification, le produit fluxant est du gasole de craqueur catalytique et le centrifugat obtenu est un carburant pour moteurs diesels.

8- Procédé selon les revendications 1 ou 2 caractérisé en ce que la précouche est rendue oléophobe par imprégnation d'eau préalablement au traitement de la suspension, qui comprend 50 à 70% d'eau, 10 à 40% d'huile ou de produits émulsionnables de densité comprise entre 0,8 et 0,9 , de 0,1 à 10% de matières solides, et en ce que sous l'effet de la centrifugation, l'eau traverse la précouche avec moins de 10% de l'huile ou des produits émulsionnables et au moins 90% de l'huile ou des produits émulsionnables restent à l'intérieur du panier où ils sont récupérés.

9- Procédé selon l'une des revendications 3, 4, 5, 6, 7 et 8, caractérisé en ce que la viscosité de la suspension est réglée à une valeur comprise entre 4 et 20 mPa.s par réglage de sa température entre 40 et 120°C et/ou par mélange avec un produit fluxant.

10- Procédé selon l'une des revendications 5 à 9 caractérisé en ce que du coke de charbon en poudre est ajouté à la suspension à raison de 0,2 à 0,8 % poids.

11- Procédé selon l'une des revendications 3 à 10, caractérisé en ce que le gâteau est éliminé au moyen d'un dispositif mécanique comprenant d'une lame disposée à l'intérieur du panier rotatif selon une génératrice jusqu'à réduction de l'épaisseur de la précouche à une valeur supérieure à 1 cm.

12- Procédé selon la revendication 9 caractérisé en ce que le gâteau est utilisé comme combustible.

13- Application du centrifugat obtenu par le procédé de la revendication 7 caractérisé en ce qu'il est utilisé comme carburant d'alimentation des moteurs diesels.

## FIG_1

## FIG_2

Office européen
des brevets

# RAPPORT DE RECHERCHE EUROPEENNE

Numero de la demande

EP 95 40 0948

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | EP-A-0 283 381 (INSTITUT FRANÇAIS DU PETROLE) | 1 | B01D37/02 B01D39/04 |
| A | * le document en entier * | 3,4,9,12 | |
| | --- | | |
| Y | US-A-2 055 869 (F. W. MANNING) | 1 | |
| A | * le document en entier * | 11 | |
| | --- | | |
| A | US-A-4 280 913 (CHARLES S. APPLEGATE) * revendication 1; figure 2 * | 1 | |
| | --- | | |
| A | US-A-3 356 218 (DANIEL P. GRUDOSKI) * le document en entier * | 1 | |
| | ----- | | |

DOMAINES TECHNIQUES
RECHERCHES (Int.Cl.6)

B01D

Le présent rapport a été établi pour toutes les revendications

| Lieu de la recherche | Date d'achèvement de la recherche | Examinateur |
|---|---|---|
| LA HAYE | 7 Août 1995 | Van Belleghem, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)